# EUROPÄISCHE PATENTSCHRIFT

(11) **EP 0 360 966 B1**
(45) Veröffentlichungstag und Bekanntmachung des Hinweises auf die Patenterteilung: **03.01.1996**
(21) Anmeldenummer: 89106706.8
(22) Anmeldetag: 14.04.1989
(51) Int. Cl.: G01S 7/06

(54) **Verfahren zur Erkennung von durch Landverkehr verursachten Falschzielen**
Method for recognizing false targets caused by land vehicles
Procédé de reconnaissance de cibles fausses dûes aux véhicules terrestres

(30) Priorität: 30.08.1988 DE 3829273
(43) Veröffentlichungstag der Anmeldung: 04.04.1990
(73) Patentinhaber: Daimler-Benz Aerospace Aktiengesellschaft, D-81663 München (DE)
(72) Erfinder: Minker, Manfred, Dipl.-Ing., D-7900 Ulm (DE); Kölle, Hans-Georg, Dipl.-Ing., D-7902 Blaubeuren (DE)
(74) Vertreter: Schulze, Harald Rudolf, Dipl.-Ing.

(56) Entgegenhaltungen:
- EP-A- 0 020 197
- EP-A- 0 264 525
- DE-A- 3 314 217
- US-A- 3 821 735
- US-A- 3 882 502
- US-A- 3 898 656
- PATENT ABSTRACTS OF JAPAN, Band 9, Nr. 320 (P-413)[2043], 14. Dezember 1985; & JP-A-60 147 667 (MITSUBISHI DENKI) 03-08-1985
- IEEE TRANSACTIONS ON AEROSPACE AND ELECTRONIC SYSTEMS, vol. AES-15, Nr. 4, Juli 1979, Seiten 508-517, New York, US; R.M. O'DONNELL et al.: "Automated tracking for aircraft surveillance radar systems"
- IEE CONFERENCE PUBLICATION, no. 216, RADAR'82, London, 18. - 20. Oktober 1982, Seiten 491-495, London, GB; J.S. BIRD: "Ground clutter suppression using a coherent clutter map"

## Beschreibung

Die Erfindung betrifft ein Verfahren zur Erkennung von durch Landverkehr verursachten Falschzielen der im Oberbegriff des Patentanspruchs 1 angegebenen Art und eine Anordnung zur Durchführung des Verfahrens nach dem Oberbegriff des Patentanspruchs 6.

Bei Radaranlagen mit besonderen Anforderungen an die Entdeckung auch bodennaher Flugziele führen zwangsläufig auch Landverkehrsziele, insbesondere Fahrzeuge im Bereich belebter Autostraßen zu amplitudenstarken Echos und damit zu Rohzielmeldungen. Über das Kriterium der Doppler-Geschwindigkeit können solche unerwünschten Rohzielmeldungen von Fahrzeugen nicht ausgeblendet werden, da auch Flugziele, z.B. langsam fliegende Hubschrauber oder tangential fliegende Flugzeuge im selben Dopplergeschwindigkeitsbereich liegen können. Die Rohzielmeldungen werden daher in den nachfolgenden Signalverarbeitungsstufen, z.B. Klassifizierungsverfahren zur Hubschraubererkennung, Flächen-CFAR-Maßnahmen zur Angelunterdrückung, Spurinitiierung zur Zielverfolgung etc. mit ausgewertet. Zwar können durch spezielle Auswerteprozeduren i.a. solche Landverkehrsziele noch als solche erkannt werden, die Auswertung im Parameterextraktor und im Verfolgungsrechner führt aber zu einer hohen Rechenlast in diesen Einrichtungen.

Zur Vermeidung von Spurinitiierungen im Bereich von Autostraßen ist es daher teilweise gebräuchlich, in den Zielverfolgungseinrichtungen (Tracker) sogenannte Traffic-maps anzulegen, in denen zumindest der Verlauf stark befahrener Autostraßen im Nahbereich abgespeichert ist. Zielmeldungen aus als Straßenbereich abgespeicherten Auflösungszellen bewirken dann keine Spurinitiierung.

Die Abspeicherung des Straßenverlaufs ist aber bislang aufwendig und deshalb vor allem für mobile Radaranlagen mit wechselnden Standorten ungünstig.

Aus der DE-A-3 314 217 ist eine Radaranlage bekannt zur Überwachung eines Gebietes, das in eine Vielzahl von Gebietszellen aufgeteilt ist.

Zur Auswertung der von den Gebietszellen herrührenden Echosignale wird ein Schwellwert benötigt, mit dem Störsignale (Clutter) unterdrückt werden können. Denjenigen Gebietszellen, z. B. Landstraßen, in denen außergewöhnliche Störsignale vorkommen können, werden gesonderte Schwellwerte zugeordnet und gespeichert. Liegt nun ein mögliches Ziel in einer solchen Gebietszelle, so wird das zugehörige (Ziel-)Echo mit einer Markierung gekennzeichnet, die besagt, daß das (Ziel-)Echo aus einer Gebietszelle stammt mit erhöhter Wahrscheinlichkeit für das Auftreten von Störechos.

Aus der EP-A-0 020 197 ist für eine Radaranlage, insbesondere ein Bordradar, eine Vorrichtung bekannt zur Unterdrückung von Störechos, die von unbewegten und/oder mit einer geringen Geschwindigkeit bewegten Störzielen herrühren. Dabei wird insbesondere eine sich hin- und herbewegende Sende-/Empfangsantenne verwendet. In einem mindestens vier Teilspeicher enthaltendem Speicher werden die Echosignale der letzten vier Abtastbewegungen (sweeps) der Antenne gespeichert. In einem den Teilspeichern nachgeschaltetem Vergleicher werden nun die Speicherinhalte zweier Teilspeicher verglichen, die zu zwei Abtastbewegungen (Sweeps) in derselben Abtastrichtung der Antenne gehören. Vor dem Vergleich werden die in der vorletzten Abtastbewegung gespeicherten Zielechos entsprechend den zu erwartenden Bewegungen der Ziele modifiziert. Bei dem Vergleich werden die (Stör-)Echos unterdrückt, die in den beiden Teilspeichern dieselben Speicheradressen besitzen.

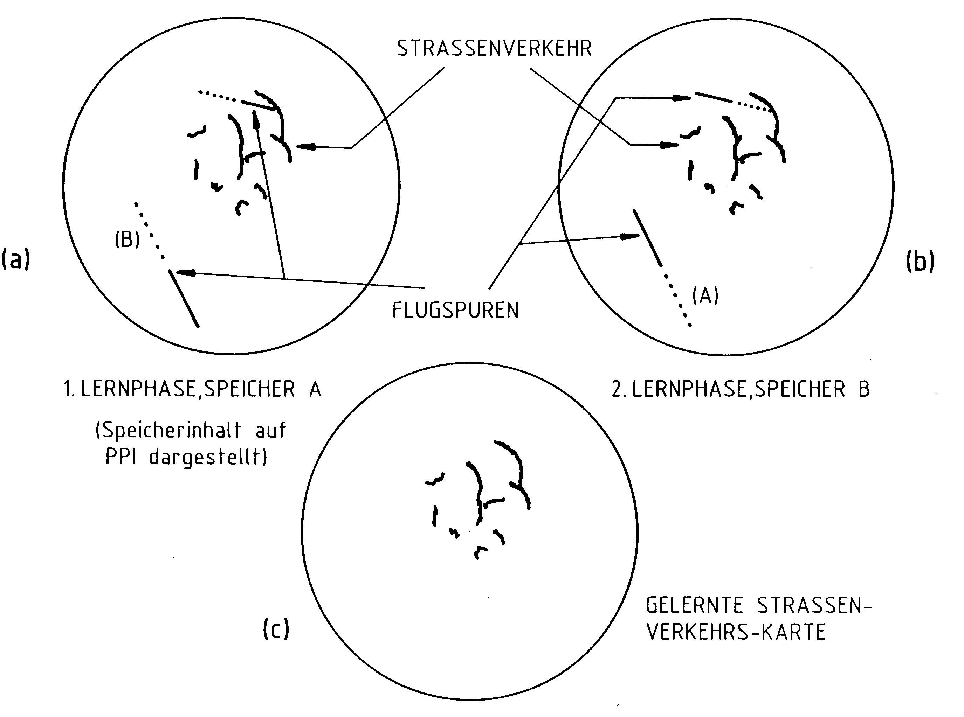

Aus dem Buch: Introduction to Radar Systems, M. I. Skolnik, 2te Auflage (1980), Seite 128, Zeilen 18-32; FIG. 4.27, 4.28 ist ein Bewegtzieldetektor (MTD) mit einer gespeicherten digitalen Clutterkarte bekannt. Bei dieser werden die Festzielen zugeordneten Schwellwerte gespeichert und zeitlich fortlaufend aktualisiert, z. B. bei dem Durchzug eines Regengebietes.

Die Erfindung liegt daher die Aufgabe zugrunde, ein Verfahren der eingangs genannten Art anzugeben, welches auf einfache Weise eine Erkennung von durch Landverkehr verursachten Falschzielen ermöglicht.

Die Erfindung ist im Patentanspruch 1 beschrieben. Die Unteransprüche enthalten vorteilhafte Ausgestaltungen und Weiterbildungen der Erfindung.

Die Erfindung macht sich auf vorteilhafte Weise zunutze, daß der Landverkehr auf räumlich sehr eng begrenzte Wege (Straßen) eingeschränkt ist und sich daher Rohzielmeldungen von Fahrzeugen auf eine vergleichsweise geringe Zahl von Auflösungszellen konzentrieren, während sich der Flugverkehr auf relativ breite Flugschneisen oder auch auf den gesamten Luftraum verteilen kann.

Im Gegensatz zur bei Radaranlagen üblichen Umlaufkorrelation, bei welcher ausgenutzt wird, daß bei hinreichend kurzem Informationserneuerungsintervall (scan) in zwei aufeinanderfolgenden Umläufen dasselbe Ziel jeweils eine Zielmeldung in derselben Auflösungszelle bewirkt, werden bei der Erfindung die in größerem Zeitabstand von verschiedenen Landverkehrszielen in derselben Auflösungszelle hervorgerufenen Zielmeldungen als Entscheidungsgrundlage für das Erkennen von Landverkehrszielen herangezogen. Wesentliches Unterscheidungsmerkmal ist damit die räumlich hochaufgelöste Verkehrsdichte.

Die einzelnen Rohzielmeldungen enthalten für sich gesehen kaum Anhaltspunkte für eine Klassifizierung als Landverkehrsecho. Durch die räumlich hochauflösende zellenweise Prüfung auf das Auftreten von Landverkehrszielen und Speicherung eines entsprechenden Hinweises für die betroffenen Auflösungszellen können aber eng begrenzte Erwartungsgebiete für solche Falschzielmeldungen ermittelt und Rohzielmeldungen aus diesen Auflösungszellen mit einer Markierung versehen werden. Da auch Flugziele insbesondere Hubschrauber sich im Bereich von Straßen bewegen können, ist eine Unterdrückung von Echos aus Auflösungszellen, für welche ein Hinweis auf das Auftreten von Landverkehrszielen gespeichert ist, nicht sinnvoll. Durch die mit der Markierung von Rohzielmeldungen zum Ausdruck gebrachte Wahrscheinlichkeit für das Vorliegen einer Landverkehrs-Rohzielmeldung kann die Rechenlast für die Auswertung aber teilweise erheblich reduziert werden.

Da die Erkennung und Markierung von mit hoher Wahrscheinlichkeit von Landverkehr stammenden Echos bereits auf der Ebene der Rohzielmeldungen erfolgt, kann bereits im Signalprozessor vor dem Parameterextraktar eine gewisse Vorsortierung der Rohzielmeldungen vorgenommen und dadurch der Vorteil der dort einfachen Realzeit-Steuerung genutzt werden. Die Rohzielmeldungen werden vorteilhafterweise am Ausgang der Zielentscheidungsschwelle nach der CFAR-Verarbeitung im Dopplerprozessor, wo auch die Schwellenüberschreitungen aller Dopplerfilter vorliegen, entnommen. Da die Zielamplituden wenig aussagekräftig für die Entscheidung über das Vorliegen von Landverkehrszielen sind, werden die Rohzielmeldungen lediglich als Ein-Bit-Aussage "Ziel ja oder nein" bei der Entscheidung zugrunde gelegt. Um zu vermeiden, daß Rauschspitzen, Clutterreste oder dergleichen das Auftreten von Landverkehrszielen vortäuschen und mitgelernt werden, wird vorzugsweise überprüft, ob in zwei aufeinanderfolgenden Signalblöcken (Bursts), d.h. üblicherweise mindestens zweimal pro Halbwertsbreite der Antenne eine Rohzielmeldung in demselben Entfernungstor aufgetreten ist.

Vorzugsweise wird der Lernprozess in mehrere Lernphasen, die jeweils mindestens ein Informationserneuerungsintervall, vorteilhafterweise aber mehrere Intervalle umfassen,unterteilt und in jeder Lernphase die Zielsituation, d.h. die Gesamtheit der Rohzielmeldungen in den jeweiligen Auflösungszellen ermittelt und als Ein-Bit-Aussage zellenweise gespeichert. Aus dem Vergleich der gespeicherten Zielsituationen zweier oder mehrerer aufeinanderfolgender Lernphasen wird für die Auflösungszellen, für welche eine vorgegebene Koinzidenzbedingung, z.B. Rohzielmeldungen in allen oder einer Mindestzahl der verglichenen Lernphasen, erfüllt ist, auf das Vorliegen von Landverkehrszielen entschieden und ein entsprechender Hinweis abgespeichert.

Der einfachste Fall ist die Unterteilung des Lernprozesses in zwei zeitlich getrennte Lernphasen, die vorteilhafterweise gleich lang sind. Es seien dann zwei gleiche Speicher vorhanden, deren Speicherplätze durch die Koordinaten der Auflösungszellen adressierbar sind und die daher eine der Zahl der Auflösungszellen in dem zur Landverkehrsziel-Überprüfung vorgesehenen Gebiet entsprechende Zahl von Speicherzellen aufweisen. Die in der ersten Lernphase vom Dopplerprozessor abgegebenen Rohzielmeldungen werden als Ein-Bit-Information in den Speicher A, die der zweiten Lernphase in den Speicher B eingeschrieben. Die Lernphasen umfassen jeweils eine Mehrzahl von Antennenumläufen, wobei eine Zielmeldung in nur einem der Umläufe denselben Eintrag im Speicher bewirkt wie mehrfache Zielmeldungen in derselben Auflösungzelle.

Die Flugspur eines Flugzeugs wird dann zur Hälfte in Speicher A und zur Hälfte in Speicher B, aufgrund der Flugbewegung aber in völlig verschiedenen Speicherplätzen (Auflösungszellen-Koordinaten) als Rohzielmeldungen abgelegt. Werden die Speicherinhalte nach Abschluß der zweiten Lernphase adressenweise (zellenweise) auf koinzidierende Zielmeldungseinträge überprüft (UND-Verknüpfung), so wird für die von von dem Flugziel herrührenden gespeicherten Rohzielmeldungen keine Übereinstimmung festgestellt und zutreffenderweise kein Auftreten von Landverkehrszielen festgestellt. Auf für den Fall mehrerer auftretender Flugziele während des Lernprozesses werden Übereinstimmungen nur dann festgestellt, wenn in der zweiten Lernphase exakt gleiche Auflösungszellen durchflogen werden wie in der ersten Lernphase. Daraus resultiert, daß die Lernphasen nicht beliebig lange gewählt werden können, da sonst zu viele Flugbewegungen die Speicherplätze füllen.

Bei mäßig bis stark befahrenen Autostraßen hingegen treten während jeder Lernphase eine Vielzahl von Rohzielmeldungen auf, die sich auf eine vergleichsweise geringe Zahl von Auflösungszellen und damit Speicherplätzen konzentrieren. Die Verknüpfung der Speicherinhalte nach Abschluß des Lernprozesses liefert dann mit den Auflösungszellen mit übereinstimmenden Rohzielmeldungen ein Abbild des Verlaufs zumindest der stärker befahrenen Straßen. Bei schwächer befahrenen Straßen und kurzen Lernphasen können übereinstimmende Fahrzeugbewegungen während des Lernprozesses fehlen und nach Abschluß des Lernprozesses von Landverkehrszielen verursachte Rohzielmeldungen nicht markiert werden.

Die Lernphasen können aus diesem Grund nicht beliebig kurz gewählt werden.

Für die Dauer der Lernphasen ist daher ein auf den jeweiligen Einzelfall abzustimmender Kompromiß zu wählen, welcher die Verkehrsdichte auf den Straßen und die Dichte der Flugbewegungenberücksichtigt. Vorzugsweise ist die Dauer der Lernphasen einstellbar. Bei zeitlich variierenden Dichten des Straßenverkehrs und/oder des Flugverkehrs wird sinnvollerweise der Lernprozess in eine Zeit hoher Straßenverkehrsdichte bzw. geringer Flugverkehrsdichte gelegt.

Bei einer besonders vorteilhaften Ausführungsform der Erfindung wird der Lernprozess in eine Mehrzahl von Lernphasen, die jeweils wiederum eine Mehrzahl von Informationserneuerungsintervallen umfassen, unterteilt, für die Entscheidung auf das Auftreten von Landverkehrszielen aber nur jeweils die gespeicherten Zielsituationen zweier aufeinanderfolgender Lernphasen in der beschriebenen Weise verglichen. Die aus einem Vergleich gewonnenen Hinweise auf das Auftreten von Landverkehrszielen bleiben für die Folgezeit erhalten und werden aus neuen Vergleichen lediglich ergänzt, so daß sich allmählich ein immer besseres Abbild des Straßenverlaufs aufbaut. Diese Ausführungsform weist eine Reihe besonderer Vorteile auf, die im wesentlichen daraus resultieren, daß die Lernphasen wesentlich kürzer gewählt werden können und bei gleicher Dauer des Lernprozesses entsprechend mehr Lernphasen durchgeführt werden als bei lediglich zwei Lernphasen.

Für stark befahrene Straßen entsteht dabei kein Entdeckungsverlust, da in diesem Falle in jeder Lernphase in allen von der Straße durchzogenen Auflösungszellen Rohzielmeldungen auftreten. Das Ergebnis liegt aber bereits nach wesentlich kürzerer Zeit vor, so daß die Rohzielmeldungen von stark befahrenen Straßen, die auch den Hauptteil der ansonsten hohen Rechenlast bei der Auswertung verursachen, schon kurz nach Beginn des Lernprozesses markiert werden können. Bei schwächer befahrenen Straßen geht der Aufbau langsamer oder bleibt u.U. auch lückenhaft. Schwächer befahrene Straßen sind aber auch nur zu einem geringen Anteil an den Landverkehrszielen beteiligt, so daß das beschriebene Verfahren das Problem der Landverkehrsziele auf besonders vorteilhafte und wirkungsvolle Weise löst. Kürzere Lernphasen wirken sich auch wie bereits erwähnt vorteilhaft auf die von Flugzielen herrührenden Rohzielmeldungen in der Weise aus, daß die Wahrscheinlichkeit des exakten Schneidens zweier Flugspuren umso geringer ist, je kürzer der Beobachtungszeitraum ist. Für vorgegebene Flugkorridore gilt, daß zwei Flugzeuge nur in einem zeitlichen Minimalabstand von einigen Minuten passieren und die Lernphasen durchaus so kurz gewählt werden können, daß der zeitliche Minimalabstand länger als zwei Lernphasen ist. Zudem sind vorgegebene Flugkorridore in der Regel bekannt und in den umfaßten Auflösungszellen können, vorzugsweise durch eine programmierbare Maskierung dort fälschlicherweise erzeugter Landverkehrsmarkierungen, die Falschzielentscheidungen aufgehoben werden.

Um zu vermeiden, daß bei langsameren Flugbewegungen z.B. eines Hubschraubers oder bei Staffelflügen auf Grund der Ausdehnung der Auflösungszelle bei Lernphasenwechsel eine Rohzielmeldung in derselben Auflösungszelle in zwei aufeinanderfolgenden Lernphasen auftritt und einen falschen Hinweis auf Landverkehrsziele erzeugt, wird gemäß einer vorteilhaften Ausführungsform nach jeder Lernphase eine kurze Lernpause von einem oder mehreren Antennenumläufen eingeführt.

Nach Abschluß des Lernprozesses, dessen Gesamtdauer sich danach richtet, inwieweit auch die weniger befahrenen Straßen gelernt werden sollen, ist für den momentanen Standort der Radaranlage das Straßennetz weitgehend gespeichert und bleibt für den weiteren Radarbetrieb zur Markierung von Rohzielmeldungen aus von Landverkehr betroffenen Auflösungszellen erhalten.

Besonders vorteilhaft ist die Möglichkeit, den Lernprozess zu beliebiger Zeit wieder fortzusetzen, ohne den bestehenden Inhalt zu löschen. Hiermit kann beispielsweise ein nur zu bestimmten Zeiten nennenswert befahrenes Straßenstück nachgelernt werden oder der Lernprozess kann bei Aufkommen stärkeren Flugverkehrs unterbrochen werden.

Das erfindungsgemäße Verfahren ist auf besonders einfache Weise realisierbar, was anhand eines Beispiels für die Ausführungsform mit einem in eine Mehrzahl von kurzen Lernphasen unterteilten Lernprozess mit paarweisem Vergleich der Zielsituationen zweier aufeinanderfolgender Lernphasen veranschaulicht ist.

Es seien zwei gleiche, mit ausreichender Anzahl von Speicherzellen dimensionierte Speicher A und B vorgesehen, die zu Beginn des Lernprozesses gelöscht sind. In der ersten Lernphase werden alle Rohzielmeldungen in die den jeweiligen Auflösungszellen zugeordneten Speicherzellen als Ein-Bit-Aussage eingeschrieben. In der zweiten Lernphase werden die anfallenden Rohzielmeldungen in gleicher Weise in den Speicher B eingeschrieben. Anschließend werden die eingespeicherten Rohzielaussagen der beiden Speicher in Zellen gleicher Adressen (Koordinaten) auf übereinstimmende Rohzielmeldungen überprüft (UND-Verknüpfung). Nicht kongruente, d.h. nur in einem Speicher auftretende Zieleinträge werden gelöscht. In beiden Speichern übereinstimmende Zieleinträge bleiben erhalten. Die in der dritten Lernphase auftretenden Rohzielmeldungen werden wieder in den Speicher A eingeschrieben, soweit in der betroffenen Speicherzelle nicht bereits ein Zieleintrag vorliegt. In gleicher Weise werden die Rohzielmeldungen aus der vierten Lernphase in den Speicher B eingeschrieben und danach wiederum beide Speicherinhalte auf übereinstimmende Einträge überprüft und nicht übereinstimmende Einträge gelöscht. Nach Ablauf des Lernprozesses liegen in den beiden Speichern deckungsgleiche Inhalte als Abbild des Straßenverlaufs (traffic-map) vor, die zur Markierung von Rohzielmeldungen im weiteren Radarbetrieb ausgelesen werden.

Zusätzlich können die Speicherinhalte zur Darstellung von Straßenverläufen auf dem Bildschirm eines Radarsichtgeräts angezeigt werden.

Eine weitere Beschleunigung des Lernprozesses ist dadurch möglich, daß nach Einspeicherung der Rohzielmeldungen der zweiten Lernphase in den Speicher B bei der zellenweisen UND-Verknüpfung der Speicher die nicht kongruenten Zieleinträge nur im Speicher A gelöscht werden, der Inhalt von Speicher B hingegen unverändert bleibt. Nach Abschluß der dritten Lernphase wird dann bereits der nächste zellenweise Speichervergleich durchgeführt, dabei werden jetzt die nicht kongruenten Einträge aber nur im Speicher B gelöscht. Nach jeder Lernphase wird ein Speichervergleich durchgeführt, wobei die nicht kongruenten Speichereinträge aber nur in dem Speicher mit den älteren Zieleinträgen gelöscht werden.

Wie aus den detaillierten Ausführungen leicht ersichtlich, verläuft der Lernprozess parallel zum gewöhnlichen Radarbetrieb, wobei Störungen durch stark befahrene Straßen bereits nach sehr kurzer Zeit als Falschziele erkannt und entsprechend behandelt werden können. Eine mobile Radaranlage kann an einem neuen Standort daher von Anfang an normalen und weitgehend störungsfreien Betrieb aufnehmen.

Die Abbildung zeigt drei PPI-Sichtgerätanzeigen, die
a) die Zielsituation in der ersten Lernphase (Speicher A),
b) die Zielsituation in der zweiten Lernphase (Speicher B) und
c) die nach zellenweisen Vergleich der Speicher A und B gelernten und gespeicherten Straßenverläufe
wiedergeben.

Deutlich zu erkennen ist, daß die Flugspuren von zwei Flugzielen mit unterschiedlicher Geschwindigkeit teilweise in der ersten, teilweise in der zweiten Lernphase auftreten (Flugspur aus der jeweils anderen Lernphase punktiert) und deshalb nach UND-Verknüpfung der beiden Speicher verschwunden sind, wogegen die von Straßenverkehrszielen verursachten Ziele in beiden Lernphasen weitgehend übereinstimmen und nach Vergleich der beiden Speicherinhalte die übereinstimmenden Teile erhalten bleiben.

## Patentansprüche

1. Verfahren zur Erkennung von durch Landverkehr verursachten Falschzielmeldungen bei einer Radaranlage, bei welchem
- aus den Radarechosignalen nach einer Vorverarbeitung Auflössungszellen zugeordnete Rohzielmeldungen gewonnen und weiteren Signalverarbeitungsstufen zugeführt werden und
- beim Auftreten einer Rohzielmeldung in einer der auswählbaren Auflösungszellen diese Rohzielmeldung markiert wird, dadurch gekennzeichnet,
- daß ein zeitlich wähl-, abbrech- sowie fortsetzbarer Landverkehrsziel-Lernprozeß, der aus mindestens zwei zeitlich aufeinanderfolgende Lernphasen besteht, durchgeführt wird,
- daß jede Lernphase aus mehreren Informationserneuerungsintervallen besteht,
- daß während jeder Lernphase alle darin auftretenden Rohzielmeldungen zu den zugehörigen Auflösungszellen gespeichert werden in einer Speicheranordnung mit zwei gleich großen Speichern A und B, wobei in jedem der Speicher A, B eine der Anzahl der Auflösungszellen entsprechende Anzahl von Speicherzellen vorhanden ist und wobei in jedem Speicher die zugehörigen Speicherzellen durch die Koordinaten der Auflösungszellen adressierbar sind,
- daß während jeder Lernphase zu jeder Auflösungszelle jeweils nur eine Rohzielmeldung in einen der Speicher A, B gespeichert wird,
- daß die gespeicherten Rohzielmeldungen aus jeweils zwei aufeinanderfolgenden Lernphasen zellenweise verglichen werden,
- daß ein Vergleicher zum zellenweisen Vergleich der Speicherinhalte zweier aufeinanderfolgender Lernphasen vorgesehen ist, der an Speicheradressen mit nicht übereinstimmenden Speicherinhalten in den zwei Speichern A und B zumimdest die Speicherinhalte der Speicherzellen in dem Speicher, welcher die älteren Rohzielmeldungen enthält, löscht und
- daß koinzidierende Rohzielmeldungen, die in zugehörigen Speicherzellen der beiden Speicher gespeichert sind, eine ein Landverkehrsziel kennzeichnende Markierung erhalten.
- daß bei Aulösungszellen mit koinzidierenden Rohzielmeldungen ein Auftreten eines Landverkehrszieles festgesetzt wird und
- daß jede Auflösungszelle, in der ein Landverkehrsziel vorkommt, mit einer Markierung gekennzeichnet wird und daß anschließend in dem Speicher mit dem älteren Speicherinhalt die Speicherinhalte gelöscht werden zumindest in derigenigen Speicherzellen, in deren keine koinzidierenden Rohzielmeldungen vorliegen.

2. Verfahren nach Anspruch 1, dadurch gekennzeichnet, daß bei der Fortsetzung eines abgebrochenen Landverkehrsziel-Lernprozesses die gespeicherten Markierungen beibehalten werden.

3. Verfahren nach Anspruch 1 oder 2, dadurch gekennzeichnet, daß zwischen aufeinanderfolgenden Lernphasen jeweils eine ein oder mehrere Informationserneuerungsintervalle umfassende Lernpause eingefügt wird.

4. Verfahren nach einem der Ansprüche 1 bis 3, dadurch gekennzeichnet, daß die Dauer der Lernphasen und/oder der Lernpausen eingestellt werden kann.

5. Verfahren nach einem der vorhergehenden Ansprüche, dadurch gekennzeichnet, daß die Auflösungszellen, für die eine Markierung für das Auftreten von Landverkehrszielen vorliegt, auf einem Sichtgerät angezeigt werden.

6. Anordnung zur Durchführung des Verfahrens nach Anspruch 1 bei welcher Einrichtugen vorgesehen sind, um
- aus den Radarechosignalen nach einer Vorverarbeitung Auflösungszellen zugeordnete Rohzielmeldungen zu gewinnen und weiteren Signalverarbeitungsstufen zuzuführen, und
- beim Auftreten einer Rohzielmeldung in einer der Auflösungszellen diese Rohzielmeldung zu markieren, dadurch gekennzeichnet,
- daß für einen zeitlich wähl-, abbrech- sowie fortsetzbarer Landverkehrsziel-Lernprozeß, der aus mindestens zwei zeitlich aufeinanderfolgende Lernphasen besteht, wobei jede Lernphase mehrere Informationserneuerungsintervalle enthält und wobei während jeder Lernphase alle darin auftretenden Rohzielmeldungen zu den zugehörigen Auflösungszellen gespeichert werden,
eine Speicheranordnung mit zwei gleich großen Speichern A und B vorgesehen ist, wobei beide Speicher jeweils dieselbe Anzahl von Speicherzellen besitzen und wobei bei jedem der Speicher die zugehörigen Speicherzellen durch die Koordinaten der Auflösungszellen adressierbar sind,
daß eine Zeitsteuereinrichtung die Einspeicherung von Rohzielmeldungen in aufeinanderfolgenden Lernphasen abwechselnd in Speicher A und Speicher B veranlaßt,

## Claims

1. Method of recognising false target reports, caused by land vehicles, in a radar installation, in which
- raw target reports associated with resolution cells are obtained from the radar echo signals after a preliminary processing and fed to further signal processing stages and
- on occurrence of a raw target report in one of the selectable resolution cells this raw target report is flagged, characterised thereby
- that a land vehicle target learning process, which in terms of time can be selected, interrupted as well as continued and which consists of at least two learning phases succeeding one another in time, is performed,
- that each learning phase consists of several information renewal intervals,
- that during each learning phase all raw target reports, which occur therein, at the associated resolution cells are stored in a storage arrangement with two stores A and B of equal size, wherein a number of storage cells corresponding to the number of resolution cells is present in each of the stores A, B and wherein in each store the associated storage cells are addressable by the co-ordinates of the resolution cells,
- that during each learning phase at each resolution cell each time only one raw target report is stored in one of the stores A, B,
- that the stored raw target reports from each time two successive learning phases are compared cell by cell,
- that in the case of resolution cells with coinciding raw target reports an occurrence of a land vehicle target is established and
- that each resolution cell in which a land vehicle target is present is marked by a markerand that finally in the store with the older store content the store contents are erased at least in those storage cells in which no coinciding raw target reports are present.

2. Method according to claim 1, characterised thereby that in the case of continuation of an interrupted land vehicle target learning process the stored markers are maintained.

3. Method according to claim 1 or 2, characterised thereby that a learning phase comprising one or more information renewal intervals is inserted each time between successive learning phases.

4. Method according to one of claims 1 to 3, characterised thereby, that the duration of the learning phases and/or of the learning intervals can be set.

5. Method according to one of the preceding claims, characterised thereby that the resolution cells for which a marking for the occurrence of land vehicle targets is present are indicated on a viewing apparatus.

6. Arrangement for carrying out the method according to claim 1, in which devices are provided in order
- to obtain raw target reports associated with resolution cells from the radar echo signals after a preliminary processing and to feed them to further signal processing stages and
- on occurrence of a raw target report in one of the resolution cells to mark this raw target report, characterised thereby
- that a storage arrangement with two stores A and B of equal size is provided for a land vehicle target learning process which in terms of time can be selected, interrupted as well as continued and which consists of at least two learning phases succeeding one another in time, wherein each learning phase contains several information renewal intervals and wherein during each learning phase all raw target reports, which occur therein, at the associated resolution cells are stored, the two stores A and B possessing the same number of storage cells and at each of the stores the associated storage cells being addressable by the co-ordinates of the resolution cells,
- that a time control device causes the reading of raw target reports in successive learning phases alternately into store A and store B
- that a comparator is provided for cell-by-cell comparison of the store contents of two successive learning phases, which erases, at store addresses with non-agreeing store contents in the two stores A and B, at least the store contents of the storage cells in the store containing the older raw target reports, and
- that coinciding raw target reports which are stored in associated storage cells of the two stores receive a marker marking a land vehicle target.

## Revendications

1. Procédé pour la reconnaissance de signalisations de cibles fausses causées par le trafic terrestre, lors d'une installation de radar, lors duquel :
- à partir des signaux d'écho de radar, après un prétraitement, des signalisations de cible brutes associées à des cellules de résolution sont obtenues et amenées à des étapes de traitement de signal ultérieures, et
- lors de l'apparition d'une signalisation de cible brute dans une des cellules de résolution susceptibles d'être sélectionnées, cette signalisation de cible brute est marquée,
caractérisé en ce,
- qu'un processus d'apprentissage de cible de trafic terrestre, susceptible d'être choisi, interrompu ainsi que continué dans le temps, qui consiste en au moins deux phases d'apprentissage se suivant l'une l'autre dans le temps, est exécuté,
- que chaque phase d'apprentissage consiste en plusieurs intervalles de renouvellement d'information,
- que durant chaque phase d'apprentissage, toutes les signalisations de cible brutes survenant dans celle-ci sont mises en mémoire aux cellules de résolution associées, dans un agencement de mémoire comportant deux mémoires A et B de même grandeur, un nombre de cellules de mémoire, correspondant au nombre des cellules de résolution, étant présent dans chacune des mémoires A, B, et, dans chaque mémoire, les cellules de mémoire associées étant susceptibles d'être adressées par les coordonnées des cellules de résolution,
- que durant chaque phase d'apprentissage, à chaque cellule de résolution, chaque fois, seule une signalisation de cible brute est mise en mémoire dans une des mémoires A, B,
- que les signalisations de cible brutes, à partir chaque fois de deux phases d'apprentissage se suivant l'une l'autre, sont comparées cellule par cellule,
- que, lors de cellules de résolution avec des signalisations de cible brutes coïncidentes, une apparition d'une cible de trafic terrestre est déterminée,
- que chaque cellule de résolution, dans laquelle une cible de trafic terrestre survient, est caractérisée avec un marquage, et
- que, consécutivement, dans la mémoire avec le contenu de mémoire le plus ancien, les contenus de mémoire sont effacés, au moins dans celles des cellules de mémoire, dans lesquelles aucune signalisation de cible brute coïncidente n'est présente.

2. Procédé selon la revendication 1, caractérisé en ce que, lors de la poursuite d'un processus d'apprentissage de cibles de trafic terrestre interrompu, les marquages mis en mémoire sont conservés.

3. Procédé selon la revendication 1 ou la revendication 2, caractérisé en ce que, entres des phases d'apprentissage se suivant l'une l'autre, chaque fois, une pause d'apprentissage, comprenant un intervalle de renouvellement d'information ou plusieurs, est insérée.

4. Procédé selon une des revendications 1 à 3, caractérisé en ce que la durée des phases d'apprentissage et/ou des pauses d'apprentissage peut être ajustée.

5. Procédé selon une des précédentes revendications, caractérisé en ce que les cellules de résolution, pour lesquelles un marquage pour l'apparition de cibles de trafic terrestre est présent, sont indiquées sur un dispositif de vision.

6. Agencement pour la mise en oeuvre du procédé selon la revendication 1, lors duquel, des agencements sont prévus, afin :
- à partir des signaux d'écho de radar, après un prétraitement, d'obtenir des signalisations de cible brutes associées à des cellules de résolution et de les amener à d'autres étapes de traitement de signal, et
- lors de l'apparition d'une signalisation de cible brute dans une des cellules de résolution, de marquer cette signalisation de cible brute, caractérisé en ce,
- que pour un processus d'apprentissage de cibles de trafic terrestre, susceptible d'être choisi, interrompu ainsi que continué dans le temps, qui consiste en au moins deux phases d'apprentissage se suivant l'une l'autre dans le temps, chaque phase d'apprentissage contenant plusieurs intervalles de renouvellement d'information, et, durant chaque phase d'apprentissage, toutes les signalisations de cible brutes prenant naissance dans celle-ci, étant mises en mémoire aux cellules de résolution associées, un agencement de mémoire comportant deux mémoires A et B de même grandeur est prévu, les deux mémoires possédant, chaque fois, le même nombre de cellules de mémoire, et, lors de chacune des mémoires, les cellules de mémoire associées étant susceptibles d'être adressées par les coordonnées des cellules de résolution,
- qu'un agencement de temporisation provoque la mise en mémoire de signalisations de cible brutes, dans des phases d'apprentissage se suivant l'une l'autre, alternativement dans la mémoire A et la mémoire B,
- qu'un comparateur est prévu pour la comparaison cellule par cellule des contenus de mémoire de deux phases d'apprentissage se suivant l'une l'autre, qui, à des adresses de mémoire avec des contenus de mémoire ne coïncidant pas, dans les deux mémoires A et B, efface au moins les contenus de mémoire des cellules de mémoire, dans la mémoire qui contient les signalisations de cible brutes les plus anciennes, et
- que des signalisations de cible brutes coïncidentes, qui sont mises en mémoire dans des cellules de mémoire associées des deux mémoires, reçoivent un marquage caractérisant une cible de trafic terrestre.
